# EUROPÄISCHE PATENTSCHRIFT

(11) **EP 1 236 971 B1**
(45) Veröffentlichungstag und Bekanntmachung des Hinweises auf die Patenterteilung: **24.06.2009**
(21) Anmeldenummer: 02001729.9
(22) Anmeldetag: 25.01.2002
(51) Int. Cl.: G01B 11/27

(54) **Verfahren und Vorrichtung zur Bestimmung der Achslage zweier Maschinenspindeln**
Procedure and device to determine the axial orientation of two machine-axles
Procédé et dispositif pour la détermination de l'orientation axiale de deux axes de machines

(30) Priorität: 01.03.2001 DE 10109462
(43) Veröffentlichungstag der Anmeldung: 04.09.2002
(73) Patentinhaber: Prüftechnik Dieter Busch AG, 85737 Ismaning (DE)
(72) Erfinder: Lysen, Heinrich, 85748 Garching (DE)

(56) Entgegenhaltungen:
- WO-A-98/05924
- DE-A- 3 422 558
- DE-A- 3 911 307
- US-A- 5 148 232

## Beschreibung

Die Erfindung betrifft ein Verfahren und eine zugehörige Vorrichtung zur Bestimmung der Achslage zweier Maschinenspindeln.
Ein solches Verfahren ist bekannt aus der DE 40 34 302 A1, Erfinder Hamar. Es wird dort ein Laserausrichtungssystem beschrieben, welches ein Laserabstrahlelement als optische Sendevorrichtung aufweist sowie ein lichtempfindliches Target als optische Empfangseinrichtung. Mit dem Target kann der Ort eines auftreffenden Laserstrahls ermittelt werden. Das Target kann anstelle eines Werkzeuges in einer Welle einer Werkzeugmaschine angebracht werden, oder in einem Bezugsteil, welches aus Sicht des Werkzeuges diesem gegenüber steht. Laserabstrahlelement und das Target sind austauschbar an entweder dem Bezugsteil oder dem drehenden Werkzeug anbringbar.

In der genannten Schrift wird davon ausgegangen, daß sowohl das Laser-Abstrahlelement als auch das lichtempfindliche Target von praktisch absoluter Genauigkeit sind, d.h. der kleinste Meßwert, der vom Instrument angezeigt werden kann, ist relativ groß im Vergleich zu dessen systematischen Eigenfehler.

Diese Voraussetzung ist nicht immer gegeben, da die entsprechenden Meßgeräte mit einer Auflösung und Genauigkeit im Mikrometerbereich arbeiten sollen und bei rauher Behandlung oder durch starke Temperatureinwirkung ungenau werden können.

In der US 5,148,232 wird ein Verfahren beschrieben, in dem zwei Spindeln einer Werkzeugmaschine zur Bearbeitung von Kurbelwellenteilen unter Verwendung eines Lasers und eines Targets ausgerichtet werden. Hier ist vorgesehen, dass der Laser möglichst genau parallel zur Achse der jeweiligen Spindel ausgerichtet wird. Dies wird überprüft, indem die Abweichung der Strahllage des Lasers nach einer halben Drehung der Welle festgestellt wird. Danach erfolgt ggf. eine Korrektur mittels Stellschrauben. Die vorliegende Erfindung verzichtet dagegen auf eine solche genaue Ausrichtung des Lasers. Auch sind in der genannten Schrift die Schritte des Messens des Ausrichtungszustands und der Korrektur des Ausrichtungszustands ineinander verwoben.

In der folgenden Beschreibung der Erfindung wird mitunter anstelle der Formulierung, eine Maschinenspindel oder ein Wellenende' nur die Formulierung, eine Maschinenspindel' verwendet, um Längen zu vermeiden.

Es ist Aufgabe der Erfindung, eine hochgenau arbeitendes Verfahren samt zugehöriger Einrichtung der gattungsgemäßen Art zu schaffen, welche sich nicht nur selbst überprüfen , sondern im Vergleich zum Stand der Technik wesentlich präzisere Meßergebnisse liefern kann. Das Verfahren/Vorrichtung soll leicht zu handhaben sein. Ausserdem soll es zumindest nicht teurer sein als bekannte Lösungen nach dem Stand der Technik. Die Erfindung wird durch Anspruch 1 definiert.

Die gestellte Aufgabe wird gemäß der Erfindung dadurch gelöst, daß ein Verfahren zur Bestimmung der Achslage zweier Maschinenspindeln oder Wellen relativ zueinander angegeben wird. Folgende Schritte werden ausgeführt :
- an einer ersten Maschinenspindel oder einem ersten Wellenende wird stirnseitig eine optische Sendevorrichtung befestigt, mit welcher ein Lichtstrahl angenähert in axiale Richtung der Spindel ausgesendet wird
- an einer zweiten Maschinenspindel oder einem zweiten Wellenende, welche bzw. welches der ersten Maschinenspindel bzw. Wellenende frontal gegenübersteht, wird stirnseitig eine flächige optische Empfangsvorrichtung befestigt, welche es gestattet, den genannte Lichtstrahl zu empfangen und dessen Auftreffpunkt nach zwei Koordinaten zu bestimmen,
- die Distanz zwischen der Sendevorrichtung und der Empfangsvorrichtung wird ermittelt
- bei feststehender zweiter Maschinenspindel wird die erste Maschinenspindel manuell oder motorisch angetrieben in mindestens drei frei wählbare Drehlagen gebracht und die zugehörigen Positionen des Auftreffpunktes des Lichtpunktes registriert; die registrierten mindestens drei Positionen des Auftreffpunktes werden dazu herangezogen, die Parameter eines zugehörigen ersten Kreises, insbesondere dessen Mittelpunkt auf der optischen Empfangsvorrichtung, zu berechnen oder alternativ mittels einer Fehlerausgleichsmethode bestmöglich zu spezifizieren
- bei feststehender erster Maschinenspindel wird die zweite Maschinenspindel manuell oder motorisch angetrieben in mindestens drei frei wählbare Drehlagen gebracht und die zugehörigen Positionen des Auftreffpunktes des Lichtpunktes registriert, die registrierten mindestens drei Positionen des Auftreffpunktes werden dazu herangezogen, die Parameter eines zugehörigen zweiten Kreises, insbesondere dessen Mittelpunkt auf der optischen Empfangsvorrichtung, zu berechnen oder alternativ mittels einer Fehlerausgleichsmethode bestmöglich zu spezifizieren
- aus den errechneten oder spezifizierten Parametern des ersten und des zweiten Kreises sowie aus der Distanz zwischen der optischen Sendevorrichtung und der optischen Empfangsvorrichtung wird der Parallelversatz der Spindeln in einer horizontalen und/oder in einer vertikalen Ebene errechnet.

Danach werden Sendevorrichtung und Empfangsvorrichtung vertauscht auf die zu untersuchenden Maschinenspindeln oder Wellen angebracht, so daß die optische Sendevorrichtung auf der zweiten Maschinenspindel und die optische Empfangseinrichtung auf der ersten Maschinenspindel montiert ist. Danach wird das Verfahren wie oben angegeben sinngemäß wiederholt, so daß aber jetzt Parameter zu zwei weiteren, nämlich einem dritten und einem vierten Kreis, errechnet werden können. Mit diesen Daten, und unter Berücksichtigung der Entfernung zwischen der optischen Sendevorrichtung und der optischen Empfangseinrichtung, können jetzt auch die Werte für den Winkelversatz in horizontaler und vertikaler Richtung bestimmt werden. Gemäß der Erfindung können die errechneten Werte für Parallelversatz und Winkelversatz nicht nur dazu verwendet werden, eine manuelle Korrektur der Ausrichtung von Spindeln durchzuführen, sondern auch einer Verstelleinrichtung zugeführt werden, welche zumindest eine von beiden auszurichtenden Spindeln so lange horizontal und vertikal bewegt, bis eine genügend genaue Ausrichtung erreicht ist, woraufhin die entsprechende Spindel in gewohnter Weise mittels Spannschrauben oder dgl. arretiert werden kann.

Gemäß dem erfindungsgemäßen Verfahren ergibt sich der Vorteil, daß durch den Laserstrahl kein geschlossener Kreisring auf dem Target abgebildet werden muß. Vielmehr genügt es, die Daten von Meßpunkten auf einem Kreisbogen zu ermitteln. In besonders günstig gelagerten Fällen kann es genügen, die Meßwerte von nur jeweils 3 Auftreffpunkten des Laserstrahles zu ermitteln und die Parameter solcherart spezifizierter Kreise auf der Empfangsvorrichtung dem weiteren Rechengang zugrunde zu legen. Von besonderem Nutzen ist es dabei, dass auch bei einer Mehrzahl erfasster Meßpunkte die Parameter eines zugehörigen Kreises in direktem, nicht iterativem Rechengang ermittelt werden. Hierbei werden Methoden der Ausgleichsrechnung verwendet, insbesondere Methoden der kleinsten Quadrate. Neben den genannten Parametern (x- und y-Position des Zentrums und Radius des Kreises) ist es gemäß der Erfindung daher auch möglich, eine Angabe bezüglich der Qualität des Ausgleichsergebnisses zu machen. Es können somit auch wichtige statistische Parameter wie relativer Fehler, Korrelationskoeffizient, Schiefe der Verteilung usw. angegeben werden.

Das vorgeschlagene Verfahren funktioniert prinzipiell ohne die Verwendung von Inclinometer-Meßwerten. In einer Variante der Erfindung werden jedoch ein oder mehrere bevorzugt elektronische Inclinometer vorgesehen, welche die aktuelle Drehlage einer Spindel ausweisen und deren Meßergebnisse bei der Ermittlung gesuchter Kreise zusätzlich verwendet werden. Damit ist die Bestimmung von Parallelversatz und Winkelversatz der Spindeln noch genauer möglich.

Darüberhinaus ist es von Vorteil, wenn alle durchgeführten Messungen und alle zugehörigen Meßergebnisse, ggf. auch vorläufige Ergebnisse, sofort auf einem elektronischen Bildschirm visualisiert werden, so daß sich eine Bedienperson einen subjektiven Eindruck über die Qualität des Meßvorganges verschaffen kann.

Die Erfindung wird im folgenden anhand der Zeichnung näher erläutert. Es zeigt:
- Fig. 1: eine bekannte Vorrichtung zur Spezifikation eines Durchstoßungspunktes einer Drehachse durch ein Target
- Fig. 2: eine erfindungsgemäße Anordnung zur Bestimmung eines Durchstoßungspunktes, sofern die Auftreffpunkte des Laserstrahls nur auf einem Teil des Vollkreises (Kreisbogen) liegen
- Fig. 3: die erfindungsgemäße Bestimmung der Lage der Drehachse einer Spindel oder Welle relativ zu einem verwendeten Target
- Fig. 4: die Wirkungsweise zur Ermittlung der wahren Drehachse von Spindel (29) im Vergleich zur Kurvenschar der emittierten Laserstrahlen (12)
- Fig. 5: eine vergleichbare Anordnung, jedoch mit vertauscht angebrachter optischer Sende- bzw. Empfangseinrichtung
- Fig. 6: eine schematische Darstellung zur Ermittlung des Winkelversatzes der beteiligten Spindeln

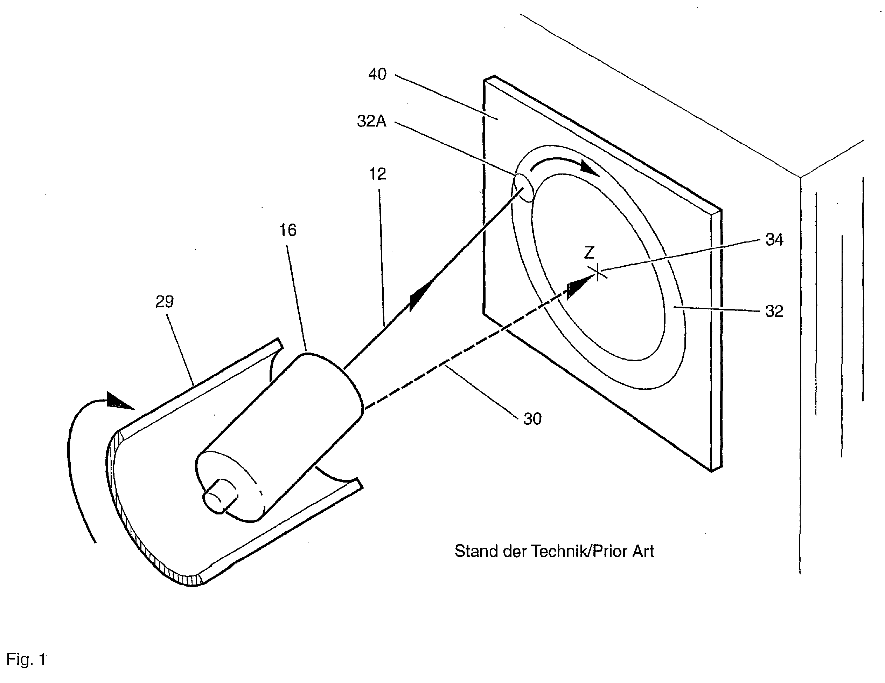

Fig. 1 weist bekannten, o.g. Stand der Technik aus und verwendet auch im wesentlichen die dortigen Bezugszeichen. An einer Spindel 29, Wellenende oder dgl. ist eine optische Sendeeinrichtung in Form eines Laserstrahl-Generators 16 angebracht, z.B. durch ein Backenfutter (nicht gezeigt). Es ergibt sich in der Praxis eine abweichende Lage des Laserstrahls 12 gegenüber der Spindelachse 30 (in der Zeichnung überhöht dargestellt). Bei Drehung der Spindel 29 beschreibt die Kurvenschar der Strahlen 12 annähernd einen Kegel*mantel*, so daß auf dem Target 40 ein Kreisring 32 beschrieben wird, hervorgerufen durch einzelne Lichtpunkte 32 A. Der Kreisring ist zentriert um das zugehörige Zentrum Z, Bezugsziffer 34, welches somit den Durchstoßungspunkt der Drehachse 30 durch das Target 40 definiert.

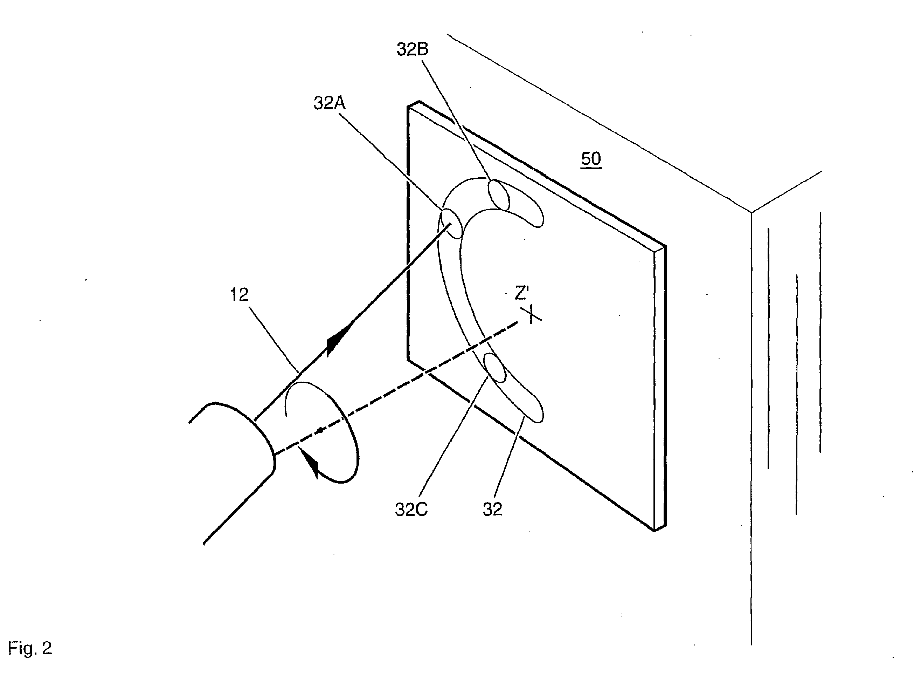

In Fig. 2 wird gezeigt, wie in ähnlicher Weise ein Durchstoßungspunkt Z' ermittelt werden kann, auch wenn anstelle eines Kreisringes nur ein Kreisbogen vorliegt, oder einzelne Lichtpunkte 32A, 32B und 32C. Gemäß der Erfindung kann nämlich auch von solchen Lichtpunkten, sofern deren zweidimensionale Koordinaten elektronisch erfaßt sind, mittels eines besten Angleiches und unter Verwendung der Methode der kleinsten Quadrate, das zugehörige Zentrum Z' mit vergleichsweise grosser Präzision ermittelt werden. Dies gelingt in der Praxis für die meisten Konturen in direktem, nicht iterativem Rechengang. Bei Bedarf können aber auch iterative Rechenverfahren verwendet werden.

Wichtig ist, daß in Fig. 2 die Verhältnisse dargestellt werden, wie sie sich bei drehender erster sowie feststehender zweiter Spindel ergeben.

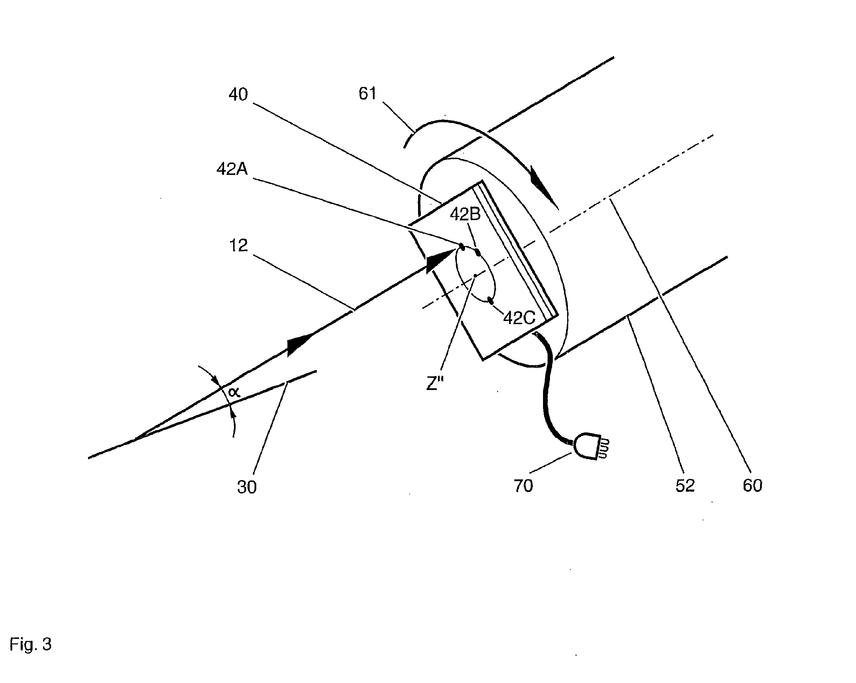

Dies ist in Fig. 3 gerade anders. Dort wird dargestellt, wie ein einzelner Lichtstrahl 12 bei arretierter erster Spindel relativ zu deren Drehachse 30 ausgesendet wird und einen ersten Auftreffpunkt 42 A auf dem Target 40 definiert. Gemäß der Erfindung kann nun die Lage der Drehachse 60 der zweiten Spindel 52 relativ zum Target 40 dadurch sehr genau festgestellt und überprüft werden, daß die zweite Spindel 52 einige Male um einen beliebigen Drehwinkel gedreht wird (cf. Drehpfeil 61), so daß durch Lichtstrahl 12 z.B. weitere Lichtpunkte 42B, 42C in Erscheinung treten. Sie definieren den Kreis mit dem Mittelpunkt Z", wobei Z" auf der tatsächlichen Drehachse 60 der Spindel liegt. Auch in diesem Falle kann die Präzision bei der Bestimmung von Z" gesteigert werden. Wiederum sind dazu aber mehr als nur drei Meßpunkte und außerdem ein zugehöriges mathematisches Ausgleichsverfahren zu verwenden. Mit Bezugsziffer 70 und der symbolisch gezeigten Steckvorrichtung wird dargestellt, daß der optischen Empfangsvorrichtung 40 eine Elektronik oder ein Rechner (nicht gezeigt) nachgeschaltet wird, womit die in elektrischer Form vorliegenden Meßergebnisse weiterverarbeitet und angezeigt werden können.

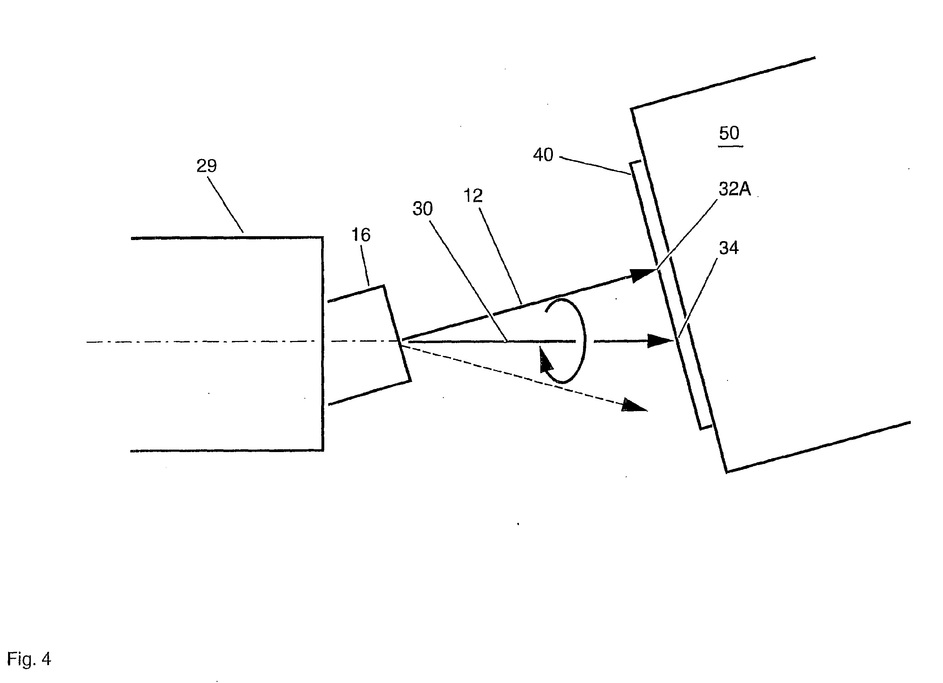

In Fig. 4 werden in querschnittsmäßiger Ansicht noch einmal die Verhältnisse aus Fig. 1 und Fig. 2 dargestellt. Es ist ersichtlich, daß nunmehr gemäß der Erfindung die Empfangsvorrichtung 40 (Sensor) so situiert sein kann, daß der Durchstoßungspunkt 34 einigermaßen nah an der Sensor-Kante liegen kann, was bislang Meßfehler zur Folge hatte.

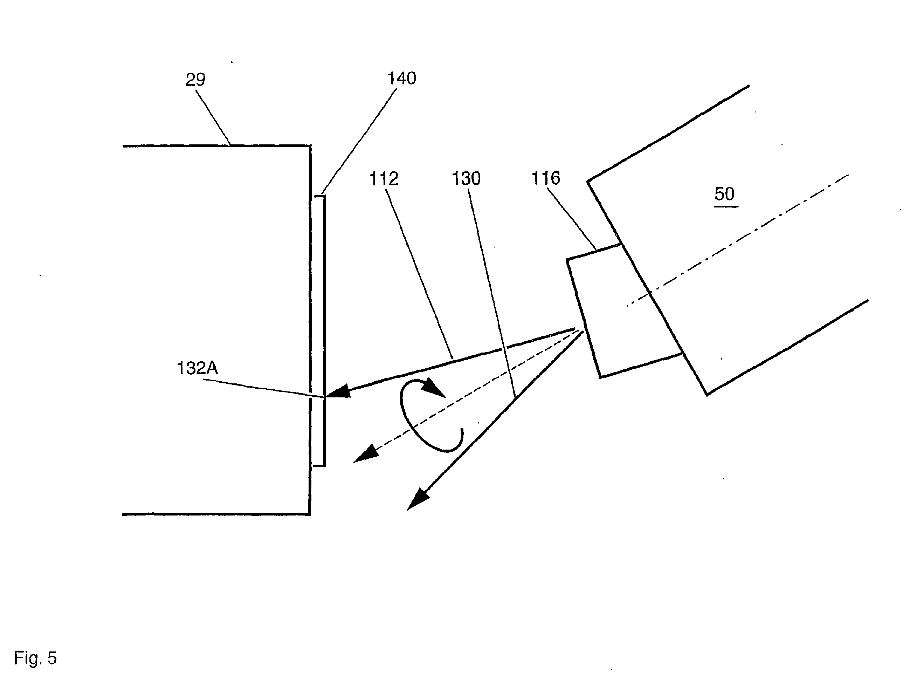

In ähnlicher Weise werden in Fig. 5 die Verhältnisse aus Fig. 3 dargestellt, sofern Sende- und Empfangsvorrichtung 116 bzw. 140 vertauscht auf erster Spindel 29 bzw. 50 positioniert sind. Bei Drehung von Spindel 50 ergibt sich ein Kegel von Lichtstrahlen 112 um die tatsächliche Drehachse 130, wie gezeigt. Auftreffpunkt 132A liegt somit relativ nahe an der Begrenzung der Empfangsvorrichtung 140, kann aber mit weiteren Auftreffpunkten trotzdem zur Bestimmung des zugehörigen Kreiszentrums dienen.

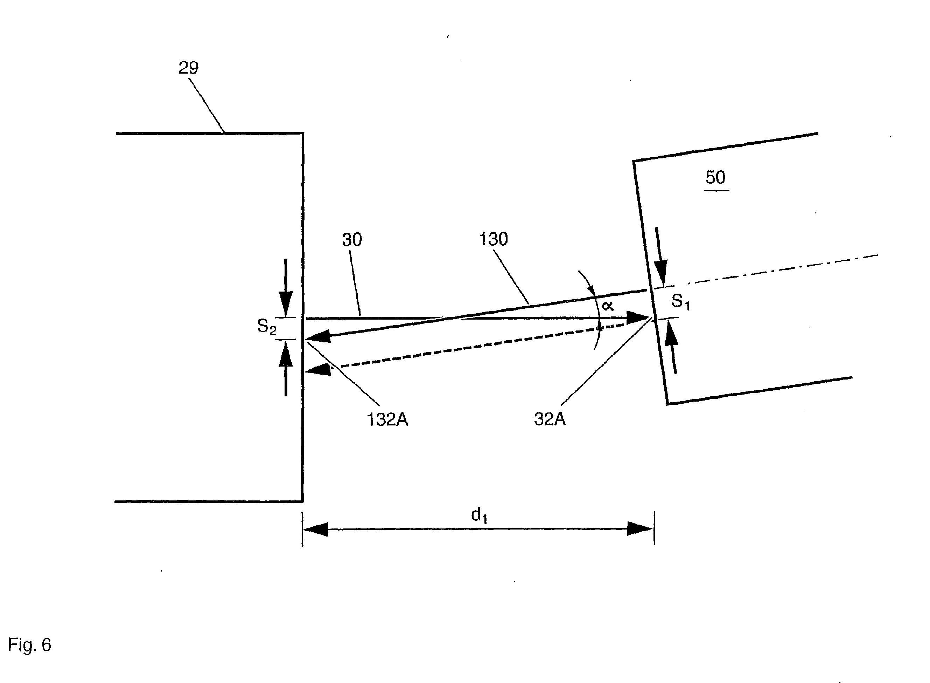

Sofern Messungen gemäß Fig. 4 und 5 mit vertauschten Sende-/Empfangvorrichtungen durchgeführt worden sind, gelingt auch die Bestimmung der Orientierung der Spindeln relativ zueinander, wie in Fig. 6 dargestellt. Unter der Voraussetzung kleiner Winkelmaße ergibt sich der beispielsweise dargestellte Winkelversatz in vertikaler Richtung aus den in y-Richtung gemessenen Versatzmaßen S1 und S2, so daß tan (alpha) = ca. (S1 + S2) / d1.

Eine entsprechende Betrachtung gilt für den Winkelversatz in horizontaler, also azimutaler Richtung.

## Patentansprüche

1. Verfahren zur Bestimmung der Achslage zweier Maschinenspindeln oder Wellen relativ zueinander, mit den folgenden Schritten:
a) an einer ersten Maschinenspindel oder einem ersten Wellenende (29) wird stirnseitig eine optische Sendevorrichtung (16) befestigt, mit welcher ein Lichtstrahl (12) angenähert in axiale Richtung der Spindel (29) ausgesendet wird,
b) an einer zweiten Maschinenspindel oder einem zweiten Wellenende (52), welche bzw. welches der ersten Maschinenspindel bzw. Wellenende (29) frontal gegenübersteht, wird stirnseitig eine flächige optische Empfangsvorrichtung (40) befestigt, welche es gestattet, den genannte Lichtstrahl (12) zu empfangen und dessen Auftreffpunkt nach zwei Koordinaten zu bestimmen,
c) die Distanz zwischen der Sendevorrichtung (16) und der Empfangsvorrichtung (40) wird ermittelt,
d) bei feststehender zweiter Maschinenspindel oder zweitem Wellenende (52) wird die erste Maschinenspindel oder das erste Wellenende (29) manuell oder motorisch angetrieben in mindestens drei frei wählbare, aber definierte Drehlagen gebracht und die zugehörigen Positionen des Auftreffpunktes (32A, 32B, 32C) des Lichtpunktes registriert; die registrierten mindestens drei Positionen des Auftreffpunktes werden dazu herangezogen, die Parameter eines zugehörigen ersten Kreises (32), insbesondere dessen Mittelpunkts (Z') auf der optischen Empfangsvornchtung (40), zu berechnen oder alternativ mittels einer Fehlcrausgleichsmethode bestmöglich zu spezifizierten,
e) bei feststehender erster Maschinenspindel oder erstem Wellenende (29) wird die zweite Maschinenspindel oder das zweite Wellenende (52) manuell oder motorisch angetrieben in mindestens drei frei wählbare, aber definierte Drehlagen gebracht und die zugehörigen Positionen des Auftreffpunktes (42A, 42B, 42C) des Lichtpunktes registriert, die registrierten mindestens drei Positionen des Auftreffpunktes werden dazu herangezogen, die Parameter eines zugehörigen zweiten Kreises, insbesondere dessen Mittelpunkt (Z") auf der optischen Empfangsvorrichtung (40), zu berechnen oder alternativ mittels einer Fehlerausgleichsmethode bestmöglich zu spezifizieren,
f) vertauschtes Anbringen von Sendevorrichtung (16) und Empfangsvorrichtung (40) auf die zu untersuchenden Maschinenspindeln oder Wellen (29, 52), so daß die optische Sendevorrichtung (16) auf der zweiten Maschinenspindel oder dem zweiten Wellenende (52) und die optische Empfangseinrichtung (40) auf der ersten Maschinenspindel oder dem ersten Wellenende (29) angeordnet ist,
g) sinngemäße Wiederholung der Schritte c), d) und e), so daß die Parameter eines dritten und eines vierten Kreises errechnet werden,
h) aus der Distanz zwischen der Sendevorrichtung (16) und der Empfangsvorrichtung (40) sowie aus den errechneten oder spezifizierten Parametern des ersten, zweiten, dritten und des vierten Kreises wird der Winkelversatz sowie der Parallelversatz der Spindeln oder Wellen (29, 52) in einer horizontalen und/oder in einer vertikalen Ebene errechnet.

2. Verfahren nach Anspruch 1, **dadurch gekennzeichnet, dass** mit den errechneten Versatzmaßen betreffend Parallelversatz und/oder Winkelversatz eine Vorrichtung gesteuert wird, mit welcher zumindest eine von beiden Spindeln oder Wellen (29, 52) derartig im Raum relativ zur jeweils anderen Spindel bewegt wird, dass ein verbleibender Versatz minimiert oder eliminiert wird.

3. Verfahren nach Anspruch 1, **dadurch gekennzeichnet, daß** die Parameter eines Kreises in direktem, nicht iterativen Rechengang ermittelt werden.

4. Verfahren nach einem der vorhergehenden Ansprüche, **dadurch gekennzeichnet, daß** neben den Parametern eines Kreises die zugehörigen statistischen Parameter des errechneten besten Kurvenangleichs angegeben werden.

5. Verfahren nach Anspruch 1, bei dem die jeweilige dort genannte Meßwerterfassung dadurch erweitert wird, daß eine zusätzliche Drehlagenerfassung der ersten und/oder zweiten Spindel (29, 52) oder Welle mittels Inclinometern durchgeführt wird und die jeweiligen Inclinometer-Meßwerte zusätzlich in den Rechengang zur Ermittlung des Parallelversatzes oder des Winkelversatzes in horizontale oder vertikale Richtung einbezogen werden.

6. Verfahren nach einem der vorhergehenden Ansprüche, **dadurch gekennzeichnet, daß** die beobachteten Auftreffpunkte des Lichtstrahls, zugehörige errechnete Kreise und die errechneten Versatzmaße auf einem elektronischen Bildschirm angezeigt werden.

## Claims

1. Method for determining the axial position of two machine spindles or shafts relative to one another, having the following steps:
a) fastened on an end face of a first machine spindle or a first shaft end (29) is an optical transmitting device (16), with the aid of which a light beam (12) is emitted approximately in an axial direction of the spindle (29),
b) fastened on an end face of a second machine spindle or a second shaft end (52), which machine spindle or shaft end is frontally opposite the first machine spindle or shaft end (29), respectively, is a flat optical receiving device (40) which permits said light beam (12) to be received and the point of impingement thereof to be determined by two coordinates,
c) the distance between the transmitting device (16) and the receiving device (40) is determined,
d) with the second machine spindle or second shaft end (52) stationary, the first machine spindle or the first shaft end (29) is brought manually or in motor driven fashion into at least three freely selectable, but defined rotary positions, and the associated positions of the point of impingement (32A, 32B, 32C) of the light spot are recorded; the recorded at least three positions of the point of impingement are used for the purpose of calculating the parameters of an associated first circle (32), in particular the centre (Z') thereof, on the optical receiving device (40), or, alternatively, specifying them as well as possible by means of an error compensation method,
e) with the first machine spindle or first shaft end (29) stationary, the second machine spindle or the second shaft end (52) is brought manually or in motor-driven fashion into at least three freely selectable, but defined rotary positions, and the associated positions of the point of impingement (42A, 42B, 42C) of the light spot is recorded; the recorded at least three positions of the point of impingement are used for the purpose of calculating the parameters of an associated second circle, in particular the centre (Z") thereof, on the optical receiving device (40), or, alternatively, specifying them as well as possible by means of an error compensation method,
f) interchanged fitting of transmitting device (16) and receiving device (40) on the machine spindles or shafts (29, 52) to be inspected, such that the optical transmitting device (16) is arranged on the second machine spindle or the second shaft end (52), and the optical receiving device (40) is arranged on the first machine spindle or the first shaft end (29),
g) repeating steps c), d) and e) mutatis mutandis such that the parameters of a third and a fourth circle are calculated,
h) the angular offset and the parallel offset of the spindles or shafts (29, 52) in a horizontal and/or in a vertical plane are calculated from the distance between the transmitting device (16) and the receiving device (40) as well as from the calculated or specified parameters of the first, second, third and the fourth circle.

2. Method according to Claim 1, **characterized in that** with the aid of the calculated offset dimensions relating to parallel offset and/or angular offset a device is controlled which is used to move at least one of the two spindles or shafts (29, 52) in space relative to the respective other spindle in such a way that a remaining offset is minimized or eliminated.

3. The method as claimed in Claim 1, **characterized in that** the parameters of a circle are determined in a direct, non-iterative computing operation.

4. The method according to one of the preceding claims, **characterized in that** in addition to the parameters of a circle the associated statistical parameters of the calculated best curve fit are specified.

5. Method according to Claim 1, in which the respective measured value acquisition mentioned there is extended by carrying out an additional rotary position acquisition of the first and/or second spindle (29, 52) or shaft by means of inclinometers, and additionally including the respective inclinometer measured values in the computing operation for determining the parallel offset or the angular offset in a horizontal or vertical direction.

6. Method according to one of the preceding claims, **characterized in that** the observed points of impingement of the light beam, associated calculated circles and the calculated offset dimensions are displayed on an electronic display screen.

## Revendications

1. Procédé de détermination de la position d'axe de deux broches ou arbres de machine l'un par rapport à l'autre, comportant les étapes suivantes :
a) sur une première broche de machine ou une première extrémité d'arbre (29), un dispositif d'émission optique (16) est fixé du côté avant, avec lequel un rayon lumineux (12) est émis approximativement dans la direction axiale de la broche (29),
b) sur une deuxième broche de machine ou une deuxième extrémité d'arbre (52), qui fait face frontalement à la première broche de machine, respectivement extrémité d'arbre (29), un dispositif de réception optique (40) plat est fixé du côté avant, lequel est conçu afin de recevoir ledit rayon lumineux (12) et de déterminer son point d'incidence selon deux coordonnées,
c) la distance entre le dispositif d'émission (16) et le dispositif de réception (40) est déterminée,
d) quand la deuxième broche de machine ou la deuxième extrémité d'arbre (52) est fixe, la première broche de machine ou la première extrémité d'arbre (29) est amenée par entraînement manuel ou motorisé dans au moins trois directions de rotation sélectionnable librement, mais définies et les positions correspondantes du point d'incidence (32A,32B,32C) du point lumineux sont enregistrées ; les au moins trois positions enregistrées du point d'incidence sont déduites afin de calculer ou en variante de spécifier le mieux possible au moyen d'une méthode de compensation d'erreurs les paramètres d'un premier cercle (32) correspondant, notamment de son point central (Z') sur le dispositif de réception optique (40),
e) quand la première broche de machine ou la première extrémité d'arbre (29) est fixe, la deuxième broche de machine ou la deuxième extrémité d'arbre (52) est amenée par entraînement manuel ou motorisé dans au moins trois positions de rotation sélectionnables librement, mais définies et les positions correspondantes du point d'incidence (42A,42B,42C) du point lumineux sont enregistrées, les au moins trois positions enregistrées du point d'incidence sont déduites afin de calculer ou en variante de spécifier le mieux possible au moyen d'une méthode de compensation d'erreurs les paramètres d'un deuxième cercle correspondant, notamment de son point central (Z") sur le dispositif de réception optique (40),
f) le dispositif d'émission (16) et le dispositif de réception (40) sont montés de manière intervertie sur les broches ou arbres de machine (29,52) à contrôler, de telle sorte que le dispositif d'émission optique (16) soit disposé sur la deuxième broche de machine ou la deuxième extrémité d'arbre (52) et le dispositif de réception optique (40) soit disposé sur la première broche de machine ou la première extrémité d'arbre (29),
g) les étapes c), d) et e) sont répétées de manière appropriée, de telle sorte que les paramètres d'un troisième et d'un quatrième cercle soient calculés,
h) d'après la distance entre le dispositif d'émission (16) et le dispositif de réception (40) ainsi que des paramètres calculés ou spécifiés du deuxième, troisième et quatrième cercle, le déport angulaire ainsi que le déport parallèle des broches ou arbres (29,52) sont calculés dans un plan horizontal et/ou vertical.

2. Procédé selon la revendication 1, **caractérisé en ce qu'**avec les dimensions de déport calculées, se rapportant à un déport parallèle et/ou un déport angulaire, un dispositif est commandé, avec lequel au moins une des deux broches ou un des deux arbres (29,52) est déplacé dans l'espace relativement à l'autre broche respective, de telle sorte qu'un déport restant soit minimisé ou éliminé.

3. Procédé selon la revendication 1, **caractérisé en ce que** les paramètres d'un cercle sont déterminés dans une procédure de calcul directe, non itérative.

4. Procédé selon une des revendications précédentes, **caractérisé en ce qu'**en dehors des paramètres d'un cercle, les paramètres statistiques correspondants du meilleur ajustement de courbe calculé sont indiqués.

5. Procédé selon la revendication 1, dans lequel ladite détection de valeur de mesure respective est élargie en ce qu'une détection supplémentaire de position de rotation de la première et/ou deuxième broche (29,52) ou du premier et/ou deuxième arbre est effectuée au moyen d'inclinomètres et les valeurs de mesure d'inclinomètre respectives sont en outre incorporées dans la procédure de calcul afin de déterminer le déport parallèle ou le déport angulaire dans la direction horizontale ou verticale.

6. Procédé selon une des revendications précédentes, **caractérisé en ce que** les points d'incidence observés du rayon lumineux, les cercles calculés correspondants et les dimensions de déport calculées sont affichés sur un écran électronique.
